Europäisches Patentamt

European Patent Office

Office européen des brevets

(11) Numéro de publication: **0 114 767**
**A2**

(12) ## DEMANDE DE BREVET EUROPEEN

(21) Numéro de dépôt: **84400082.8**

(22) Date de dépôt: **13.01.84**

(51) Int. Cl.³: **C 22 B 13/06**
**C 22 B 3/00, C 01 G 21/16**

(30) Priorité: **14.01.83 US 458148**

(43) Date de publication de la demande:
**01.08.84 Bulletin 84/31**

(84) Etats contractants désignés:
**AT BE CH DE FR GB IT LI LU NL SE**

(71) Demandeur: **SOCIETE MINIERE ET METALLURGIQUE DE PENARROYA Société anonyme dite:**
**Tour Maine-Montparnasse 33, avenue du Maine**
**F-75755 Paris Cédex 15(FR)**

(72) Inventeur: **Beutier, Didier**
**48, boulevard Edgar Quinet**
**F-75014 Paris(FR)**

(72) Inventeur: **Bruvier, Hugues**
**21, rue des Petits-Carreaux**
**F-75002 Paris(FR)**

(72) Inventeur: **Palvadeau, Claude**
**27, rue de la Savalerie**
**F-91650 Breuillet(FR)**

(74) Mandataire: **Ricalens, François**
**MINEMET RECHERCHE B.P. 106 1, avenue Albert Einstein**
**F-78191 Trappes Cedex(FR)**

(54) Elimination électrochimique du nickel, de l'antimoine, de l'arsenic et de l'étain contenus dans une solution de chlorure de plomb.

(57) L'invention concerne un procédé pour éliminer d'une solution de chlorure de plomb au moins un des métaux choisis dans l'ensemble constitué par le nickel et le cuivre d'une part, et le groupe constitué par l'antimoine, l'arsenic et l'étain d'autre part, caractérisé par le fait que pour obtenir une solution dont la teneur en l'un de ces éléments soit inférieure à 50 mg par litre:

a) on ajuste les teneurs respectives desdits métaux dudit ensemble de manière que le rapport des concentrations, exprimées en grammes par litre, entre le nickel et le cuivre d'une part et l'un des métaux dudit groupe constitué par l'antimoine, l'arsenic et l'étain d'autre part, soit compris entre 10 et 1/10;

b) on précipite lesdits métaux dudit ensemble par mise en contact de la solution avec du plomb métallique.

EP 0 114 767 A2

## ÉLIMINATION ELECTROCHIMIQUE DU NICKEL, DE L'ANTIMOINE, DE L'ARSENIC ET DE L'ÉTAIN CONTENUS DANS UNE SOLUTION DE CHLORURE DE PLOMB

La présente invention concerne un nouveau procédé d'élimination électrochimique du nickel, de l'antimoine, de l'arsenic et de l'étain contenus dans une solution de chlorure de plomb. Elle a plus particulièrement pour objet un procédé de purification d'une solution de chlorure de plomb par précipitation des éléments ci-dessus et notamment le nickel sous forme d'un composé intermétallique.

Un des problèmes les plus difficiles à résoudre dans le domaine de l'hydrométallurgie du plomb est l'élimination du nickel contenu dans les solutions de chlorures de plomb. Ce problème est encore plus difficile à résoudre lorsque la solution contient du fer ferreux.

Ainsi les techniques de résines échangeuses d'ions, qui conviennent bien pour les éléments en faible concentration, ne donnent aucun résultat satisfaisant tant au plan technique qu'au plan économique, dès lors que la concentration en fer ferreux est supérieure d'un facteur cent, voire même d'un facteur dix, à la concentration en nickel, . D'une manière plus générale, la proximité des propriétés chimiques respectives du nickel et du fer ferreux rend extrêmement difficile l'élimination des dernières traces de nickel en présence d'ions ferreux en quantité significative.

Les problèmes sont particulièrement aigus lorsqu'il est nécessaire d'abaisser la teneur en nickel de la solution à des valeurs inférieures à 50 milligrammes par litre, de préférence à 10 milligrammes par litre, voire même inférieures à 1 milligramme par litre et ce, en présence d'ions chlorures et de plomb.

Un autre but de la présente invention est également de fournir un procédé qui permette de réduire la concentration des impuretés présentes dans une solution de chlorure de plomb constituée par un ou plusieurs métaux choisis dans le groupe du cuivre, de l'arsenic, de l'antimoine et de l'étain.

Un autre but de la présente invention est également de fournir un procédé du type précédent qui convienne même en présence de quantités importantes de fer, pouvant varier de 1 à 100 grammes par litre.

Ces buts sont atteints au moyen d'un procédé pour éliminer d'une solution de chlorure de plomb au moins un des métaux choisis dans l'ensemble constitué par le nickel et le cuivre d'une part, et le groupe constitué par l'antimoine, l'arsenic et l'étain d'autre part, caractérisé par le fait que pour obtenir une solution dont la teneur en l'un de ces éléments soit inférieure à 50 mg par litre :

a) on ajuste les teneurs respectives desdits métaux dudit ensemble de manière que le rapport des concentrations, exprimées en grammes par litre, entre le nickel et le cuivre d'une part et l'un des métaux dudit groupe constitué par l'antimoine, l'arsenic et l'étain d'autre part, soit compris entre 10 et 1/10 ;

b) on précipite lesdits métaux dudit ensemble par mise en contact de la solution avec du plomb métallique.

La concentration du plomb dans la solution de chlorure de plomb peut être variable et être située par exemple dans le domaine compris entre 1 gramme par litre et la limite de solubilité du plomb, laquelle dépend de la concentration et de la nature de la saumure d'ions chlorure.

La saumure peut être une saumure de sels de métaux alcalins ou alcalino-terreux. Le chlorure d'ammonium peut également être utilisé si les étapes ultérieures le permettent ; par exemple si le chlorure de plomb est récupéré par évaporation ou sous forme d'un oxyde, le chlorure d'ammonium peut être utilisé ; mais si l'on récupère le plomb par électrolyse, la réaction anodique peut oxyder le cation ammonium, ce qui en général est défavorable.

La solution peut également contenir tous les éléments habituellement présents dans une solution en provenance de la lixiviation d'un matériau plombifère primaire ou secondaire, par exemple le zinc, le fer, le cuivre, le cadmium, le cobalt, les métaux précieux et le bismuth.

Il peut parfois être opportun de purifier préalablement la solution par cémentation au plomb des métaux précieux et du bismuth, en particulier si l'on veut que ces éléments soient récupérés d'une manière différente de celle des autres métaux.

Les conditions satisfaisantes de température et de pH sont les suivantes : pH compris entre 1 et 4 ; température comprise entre 50 et 100°C. On utilise de préférence, pour des raisons de commodité, la pression atmosphérique.

La concentration en ions chlorure est de préférence supérieure à 3 équivalent-grammes, en général aux alentours de 5 équivalent-grammes, lorsque l'on utilise du chlorure de sodium. Cette condition relative à l'ion chlorure est d'ailleurs plus une gêne qu'un avantage dans le procédé selon la présente invention.

Il convient également de préciser dès à présent que l'un des objectifs de la présente invention est de fournir une étape de purification d'une solution de chlorure de plomb destinée à être électrolysée et obtenir de cette façon du plomb doux pur. Il convient donc que la purification soit aussi complète que possible de manière à ce qu'une purification plus complète soit prévue. Il convient de préciser dès à présent que lorsque ces éléments sont présents dans la solution, le bismuth et les métaux précieux précipitent également.

Parmi les conditions donnant de bons résultats pour cette purification, on peut indiquer que le plomb métallique peut être soit introduit directement dans le milieu, de préférence sous forme de poudre de granulométrie aussi fine que possible (une granulométrie caractérisé par un $d_{80}$ de 100 micromètres est satisfaisante), soit être produit "in situ". Dans ce dernier cas, on peut ajouter un métal, non gênant pour les étapes ultérieures, plus électro-positif que le plomb, de manière à former du plomb par cémentation.

Cette technique est également très satisfaisante à condition d'utiliser des poudres de métaux suffisamment fines telles que par exemple de la poudre de fer ayant un $d_{80}$ inférieur à 100 micromètres.

On peut également, selon une mise en oeuvre préférée de l'invention, fabriquer du plomb sous forme micro-dendritique se détachant de la cathode. On peut par exemple utliser la technique décrite dans la demande de brevet européen déposée par la Demanderesse et publiée sous le numéro 0094308, cedit brevet étant réputé incorporé par référence. Dans ce dernier cas, il convient de signaler que l'on peut utiliser les conditions donnant de la poudre pyrophorique.

Enfin, signalons que les meilleurs résultats ont été obtenus lorsque la quantité de plomb introduite est supérieure à 5 et, de préférence, supérieure à 10 quantités stoechiométriquement nécessaires à la cémentation des métaux choisis dans ledit ensemble spécifié ci-dessus. Ces valeurs ne tiennent pas compte des quantités de plomb éventuellement nécessaires pour réduire la solution et à la porter à un potentiel redox par rapport à l'électrode à l'hydrogène de 500 mV environ (1 chiffre signifcatif).

Il a été démontré au cours de l'étude qui a conduit à la présente invention que, lorsque le nickel n'était pas accompagné de cuivre dans la solution, il était souhaitable d'ajouter cet élément, bien sûr sous une forme soluble. Ce métal a en effet la propriété de réduire les facultés d'agglutination des particules de plomb entre elles.

Il semblerait en outre que cet élément ait des vertus catalytiques pour l'opération selon la présente invention.

On ajuste la teneur en cuivre de la solution de l'étape a) à une valeur au moins égale à 1/5ème de la concentration en nickel, exprimées en grammes par litre, de préférence à une valeur comprise entre le quart et dix fois la concentration en nickel, exprimée en grammes par litre.

Il convient dès à présent de signaler qu'il est possible de réitérer l'opération d'ajustement des concentrations de manière à précipiter un composé intermétallique convenable et de réitérer l'opération de cémentation. On peut ainsi dans les cas difficiles et par "approximations" successives obtenir pour tous les éléments cités des teneurs inférieures à 1 milligramme par litre.

Lorsque le nickel est seul présent dans les solutions à purifier, on commence de préférence à ajuster la concentration en cuivre, puis à ajouter de l'arsenic dans un rapport molaire compris entre 1/4 et la moitié de la somme cuivre + nickel. De préférence, on utilisera toutefois l'antimoine, le rapport optimal molaire étant alors compris entre le 10ème et 1/3 de la somme nickel + cuivre. En effet, on a démontré dans la présente étude que c'était l'antimoine le métal ayant la vertu purifiante la meilleure.

En ce qui concerne l'utilisation de l'étain, le rapport molaire optimal est de l'ordre de 1/ à 3/4.

Pour l'élimination du cuivre, on peut procéder comme précédemment. Il est inutile d'ajouter du nickel.

En ce qui concerne l'élimination de l'antimoine, de l'arsenic et de l'étain, on ajoute le cuivre dans la fourchette de rapports précédemment indiqués ou en léger excès par rapport à ces valeurs. On peut alors reprécipiter l'excès de cuivre et de nickel par de l'antimoine dans une deuxième étape.

Notons que dans la plupart des cas la présence de nickel n'est pas absolument indispensable. Toutefois, il convient de bien souligner que l'un des avantages les plus importants de l'invention est de fournir un moyen qui permette d'éliminer quasi complètement le nickel avec un effet favorisable des ions ferreux, ces derniers étant avantageusement au moins égaux à 1 gramme par litre, de préférence à 10 grammes par litre, la zone la plus satisfaisante étant constituée par le domaine compris entre 20 et 100 grammes par litre.

Ainsi, la présente invention repose sur les surprenantes découvertes suivantes :

a) Une cémentation partielle du nickel par le plomb est possible en milieu chlorure concentré en présence d'ions ferreux et ce bien que le plomb soit connu comme étant moins réducteur que le nickel.

b) Quand un activateur tel que l'arsenic, l'antimoine ou l'étain est présent ou ajouté dans les solutions, la cémentation du nickel peut être totale.

c) La présense de cuivre catalyse fortement la réaction de cémentation par la poudre de plomb.

Dans des conditions convenables, la cinétique de la cémentation peut être particulièrement élevée : par exemple, la concentration en nickel peut être abaissée de 10 milligrammes par litre à moins de 0,5 milligramme par litre en une heure quand la cémentation est réalisée dans une cuve agitée, à la température de 90°C, avec 5 grammes par litre de poudre de plomb de fine granulométrie, en présence de 50 milligrammes par litre de cuivre et de 30 milligrammes par litre d'antimoine. Il a été observé que la cinétique de cémentation dans un réacteur agité dépend essentiellement des paramètres suivants : température, quantité de cuivre et d'arsenic (ou d'antimoine ou d'étain), quantité initiale et granulométrie de la poudre de plomb, cette dernière pouvant être ajoutée en plusieurs fois.

Les exemples qui suivent et qui ne présentent aucun caractère limitatif ont pour but de mettre les spécialistes à même de déterminer aisément les conditions opératoires qu'il convient d'utiliser dans chaque cas particulier.

L'influence des paramètres principaux est décrite avec plus de détails dans les exemples suivants. Tous les résultats sont obtenus de la manière suivante :

a) La solution à purifier, contenant essentiellement du chlorure de plomb dissous dans une saumure de chlorure de sodium, est introduite dans un réacteur en verre de 2 litres équipé d'un agitateur. Elle est ensuite chauffée à une température de 90°C environ.

b) L'activateur est introduit comme oxyde $As_2O_3$ ou $Sb_2O_3$ ou comme chlorure $SnCl_2$.

c) La poudre de plomb est ajoutée en une fois dans des quantités variant de 1 à 10 grammes par litre et présente une granulométrie très fine ($d_{80}$ = 80 micromètres).

d) La cémentation est réalisée en une heure ; pour déterminer son évolution, des échantillons de solution sont prélevés à intervales réguliers et analysés par spectrométrie atomique d'absorption.

Exemple 1 : Influence du fer

La solution à purifier est chauffée à 90°C ; sa composition est la suivante :

$Cl^-$ = 5,5 N

Pb  = 40 g/l

Cu  = 100 mg/l

Ni  = 100 mg/l

Fe  = variable

$H^+$  = $10^{-2}$ N

L'introduction de la poudre de plomb provoque la cémentation du cuivre et du nickel comme indiqué dans les résultats suivants :

| Fe initial | 0 g/l | 20 g/l | 40 g/l |
|---|---|---|---|
| Ni résiduel | 95 mg/l | 92 mg/l | 67,5 mg/l |

- 8 -

0114767

{Ni} (mg/l)

(1) Fe =  0 g/l
(2) Fe = 20 g/l
(3) Fe = 40 g/l

La présence d'ions ferreux favorise la cémentation du nickel ; la réduction du nickel par le contact avec la poudre de plomb atteint 32,5 %.

Exemple 2 : Influence du cuivre

Les conditions de la réaction sont les mêmes que pour l'exemple 1, le paramètre variable étant la concentration en cuivre.

Solution avant cémentation :

$Cl^- = 5,5$ N

$Pb = 40$ g/l

$Ni = 100$ mg/l

$As = 100$ mg/l

$Cu = $ variable

$H^+ = 10^{-2}$ N

Après introduction de la poudre de plomb, les résultats sont les suivants :

| Cu initial | 0 g/l | 100 mg/l |
|---|---|---|
| Ni résiduel | 70 mg/l | 28 mg/l |

{Ni} (mg/l)

(1) {Cu} =  0 mg/l
(2) {Cu} = 100 mg/l

La présence de cuivre dans la solution est nécessaire pour la cémentation du nickel, il empêche l'agglomération de la poudre de plomb qui réduirait la surface active interfaciale.

Exemple 3 : Influence de l'arsenic

Pour montrer l'influence de l'arsenic, la solution initiale a la composition suivante :

$Cl^-$ = 5,5 N
Pb = 40 g/l
Fe = 40 g/l
Cu = 100 mg/l
Ni = 100 mg/l
As = variable
$H^+$ = $10^{-2}$ N

| As initial | 0 g/l | 50 mg/l | 100 mg/l |
|------------|-------|---------|----------|
| Ni résiduel | 67,5 mg/l | 21,5 mg/l | 2,5 mg/l |

(1) {As} =   0 mg/l
(2) {As} =  50 mg/l
(3) {As} = 100 mg/l

La courbe ci-dessus montre clairement l'influence d'une augmentation de la teneur en arsenic sur la cémentation du nickel.

Il est à noter que le cuivre cémente également avec le nickel.

Exemple 4 : Influence de l'antimoine

Par comparaison avec l'arsenic, on a testé l'influence de l'antimoine.

Composition de la solution initiale :

$$Cl^- = 5,5 \text{ N}$$
$$Pb = 40 \text{ g/l}$$
$$Fe = 40 \text{ g/l}$$
$$Cu = \text{variable}$$
$$Ni = \text{variable}$$
$$Sb = \text{variable}$$
$$H^+ = 10^{-2} \text{ N}$$

La poudre de plomb provoque la cémentation du cuivre et du nickel.

| Sb initial | 30 mg/l | 100 mg/l |
|---|---|---|
| Cu initial | 50 mg/l | 100 mg/l |
| Ni initial | 9,8 mg/l | 100 mg/l |
| Ni résiduel | 0,5 mg/l | 24 mg/l |

L'influence de l'antimoine est aussi remarquable que celle de l'arsenic.

Exemple 5 : Influence de l'étain

Les conditions de la réaction sont identiques à celles de l'exemple 5, le paramètre variable étant le remplacement de l'antimoine par l'étain.

Composition de la solution initiale :

$$Cl^- = 5,5 \text{ N}$$
$$Pb = 40 \text{ g/l}$$
$$Fe = 40 \text{ g/l}$$
$$Cu = 100 \text{ mg/l}$$
$$Ni = 100 \text{ mg/l}$$
$$Sn = 100 \text{ mg/l}$$
$$H^+ = 10^{-2} \text{ N}$$

| Sb initial | 100 mg/l |
|------------|----------|
| Ni initial | 100 mg/l |
| Ni résiduel | 60 mg/l |

Exemple 6 : Influence de la concentration de la poudre de plomb

La présence de teneurs convenables en arsenic, cuivre et nickel n'assure pas nécessairement une bonne cémentation. La concentration de la poudre de plomb est aussi un facteur important.

Les conditions opératoires sont les suivantes :

Composition de la solution initiale :

$Cl^-$ = 5,5 N
Pb = 40 g/l
Fe = 40 g/l
Ni = 10 mg/l
Cu = 50 mg/l
As = 30 mg/l
Poudre de plomb = variable
$H^+$ = $10^{-2}$ N

Les résultats suivants sont obtenus :

| Pb initial | 2 g/l | 5 g/l |
|------------|-------|-------|
| Ni initial | 9,8 mg/l | 9,6 mg/l |
| Ni résiduel | 3,1 mg/l | 0,5 mg/l |

La concentration de la poudre de plomb est un facteur-clé de la cémentation ; les concentrations résiduelles de nickel obtenues après cementation sont extrêmement faibles.

Exemple 7 : Entraînement des métaux arsenic et antimoine par le cuivre et le nickel

La disparition des éléments arsenic ou antimoine, par entraînement sous forme de composés intermétalliques avec le cuivre et le nickel, doit être la plus complète possible.

Composition de la solution initiale :

$Cl^- = 5,5$ N

$Pb = 40$ g/l

$Fe = 40$ g/l

$Ni = 100$ mg/l

$Cu = 100$ mg/l

$H^+ = 10^{-2}$ N

As ou Sb

|     | Initial    | Résiduel    |
|-----|------------|-------------|
| As  | 50 mg/l    | 3 mg/l      |
| Sb  | 100 mg/l   | < 5 mg/l    |

Les teneurs résiduelles en arsenic et antimoine obtenues après cémentation sont faibles.

Au vu de ces concentrations résiduelles faibles obtenues après cémentation (Ni = 0,5 mg/l, As ou Sb = < 0,5 mg/l), ce procédé de purification peut aisément être intégré dans un procédé de production de plomb en solution par électrolyse. En fait, les seules impuretés qui restent susceptibles d'être co-déposées avec le plomb sont le fer et l'arsenic résiduels ; il est bien connu que des lingots de plombs totalement débarassés de ces impuretés peuvent être obtenus par fusion du plomb métal sous une couverte de soude.

REVENDICATIONS

1.        Procédé pour éliminer d'une solution de chlorure de plomb au moins un des métaux choisis dans l'ensemble constitué par le nickel et le cuivre d'une part, et le groupe constitué par l'antimoine, l'arsenic et l'étain d'autre part, caractérisé par le fait que pour obtenir une solution dont la teneur en l'un de ces éléments soit inférieure à 50 mg par litre :

a) on ajuste les teneurs respectives desdits métaux dudit ensemble de manière que le rapport des concentrations, exprimées en grammes par litre, entre le nickel et le cuivre d'une part et l'un des métaux dudit groupe constitué par l'antimoine, l'arsenic et l'étain d'autre part, soit compris entre 10 et 1/10 ;

b) on précipite lesdits métaux dudit ensemble par mise en contact de la solution avec du plomb métallique.

2.        Procédé selon la revendication 1, caractérisé par le fait que ledit plomb métallique est introduit sous forme de poudre.

3.        Procédé selon la revendication 2, caractérisé par le fait que ledit plomb métallique est introduit sous forme de poudre dont la granulomètrie est caractérisée par un $d_{80}$ de 40 micromètres.

4.        Procédé selon la revendication 1, caractérisé par le fait que ledit plomb métallique est produit "in situ" par une opération choisie dans le groupe constitué par l'électrolyse et la cémentation.

5.        Procédé selon la revendication 4, caractérisé par le fait que ledit plomb métallique est produit sous forme de dendrites non adhèrentes par électrolyse.

6.        Procédé selon les revendications 1 à 5 prises séparément, caractérisé par le fait que l'on ajuste la teneur en cuivre de la solution de l'étape a) à une valeur au moins égale à 1/5ème de la concentration en nickel, exprimées en grammes par litre.

7.        Procédé selon la revendication 6, caractérisé par le fait que l'on ajuste la teneur en cuivre de la solution de l'étape a) à une valeur comprise entre le quart et dix fois la concentration en nickel, exprimée en grammes par litre.

8.      Procédé selon les revendications 1 à 7 prises séparément, caractérisé par le fait que la teneur en ions ferreux de la solution à purifier est au moins égale à un gramme par litre.

9.      Procédé selon la revendication 8, caractérisé par le fait que la teneur en ions ferreux de la solution à purifier est au moins égale à dix grammes par litre.

10.      Procédé selon la revendication 9, caractérisé par le fait que la teneur en ion ferreux de la solution à purifier est comprise entre 20 et 100 grammes par litre.

11.      Procédé selon les revendications 1 à 10 prises séparément, caractérisé par le fait que la teneur en ions chlorure de la solution à purifier est au moins égale à 3 équivalents-grammes par litre.

12.      Procédé selon les revendications 1 à 11 prises séparément, caractérisé par le fait que le pH de la solution est maintenu à une valeur comprise entre 1 et 4.

13.      Procédé selon les revendications 1 à 12 prises séparément, caractérisé par le fait que la température de la solution est maintenue à une valeur comprise entre 50°C et 100°C.

14.      Procédé selon les revendications 1 à 13 prises séparément, caractérisé par le fait que l'on réitère les opérations a) et b) pour abaisser la concentration en lesdits métaux de l'ensemble à une valeur encore plus faible.

15.      Procédé selon les revendications 1 à 14 prises séparément, caractérisé par le fait que ledit métal à éliminer est le nickel et par le fait que l'on ajoute de l'antimoine de manière que le rapport entre les concentrations en nickel et en antimoine soit compris entre 3 et 1/3.

16.      Procédé selon les revendications 1 à 14 prises séparément, caractérisé par le fait que ledit métal à éliminer est le nickel et par le fait que l'on ajoute de l'arsenic de manière que le rapport entre les concentrations en nickel et en arsenic soit compris entre 3 et 1/3.

17.        Procédé selon les revendications 1 à 14 prises séparément, caractérisé par le fait que lesdits métaux à éliminer font partie du groupe constitué par l'antimoine, l'arsenic et l'étain et par le fait que l'on ajoute du nickel de manière que le rapport entre la concentration en nickel et la somme des concentrations en métaux choisis dans le groupe constitué par l'antimoine, l'arsenic et l'étain soit compris entre 3 et 1/3.